# EUROPEAN PATENT SPECIFICATION

(11) **EP 3 635 255 B1**
(45) Date of publication and mention of the grant of the patent: **11.05.2022**
(21) Application number: 18813822.6
(22) Date of filing: 05.06.2018
(51) Int. Cl.: F04B 49/22, F16K 31/122, F16K 15/02, F04C 29/12, F16K 49/00

(54) **INLET VALVE FOR COMPRESSOR PRESSING GASEOUS MEDIUM, COMPRESSOR AND METHOD FOR CONTROLLING THE INLET VALVE OF THE COMPRESSOR**
EINLASSVENTIL FÜR EINEN VERDICHTER, DER EIN GASFÖRMIGES MEDIUM PRESST, VERDICHTER UND VERFAHREN ZUM STEUERN DES EINLASSVENTILS DES VERDICHTERS
SOUPAPE D'ADMISSION POUR COMPRESSEUR PRESSANT UN MILIEU GAZEUX, COMPRESSEUR ET PROCÉDÉ DE COMMANDE DE LA SOUPAPE D'ADMISSION DU COMPRESSEUR

(30) Priority: 05.06.2017 FI 20175511
(43) Date of publication of application: 15.04.2020
(73) Proprietor: Pimatic Oy, 32700 Huittinen (FI)
(72) Inventor: ROPPONEN, Vesa, 99800 Ivalo (FI)
(74) Representative: Salomäki, Juha Kari Ensio
(86) International application number: PCT/FI2018/050422
(87) International publication number: WO 2018/224734

(56) References cited:
- EP-A1- 1 251 280
- EP-A2- 0 403 829
- CN-A- 102 817 850
- CN-A- 105 402 122
- CN-A- 105 402 122
- CN-Y- 201 344 129
- US-A1- 2002 155 007

## Description

### TECHNICAL FIELD OF INVENTION

The object of the invention is an inlet valve for a compressor pressing gaseous medium, a compressor and a method for controlling the inlet valve of the compressor, according to what is disclosed about them in the preamble of the independent claims presented below.

### STATE OF THE ART

Inlet valves for a compressor are *per se* known in the art. Patent specifications US5533873, US6027315, US2009/0028723 A1, CN201779018 U and DE19916768 A1, for example, disclose various inlet valves and their control arrangements.

Solutions according to the state of the art have many drawbacks. Often the structures are large and slow; for example, starting the compressor is slow if the flow path of the medium to be pressurized does not open sufficiently quickly. Gas may accumulate in the inlet valves being controlled with a fluid medium, and this impairs operation of the valve. Friction forces acting on components, such as piston seals, that are in contact with moving parts in a valve often rise to a high level. If large amounts of hot or cold air flow through a valve, the temperature of the valve can change disadvantageously. For example, devices operating in outdoor conditions in the wintertime are subjected to excessive cooling. Excessive cooling impairs the operational reliability of seals and causes stiffening of the lubricants, thus degrading the operational reliability of the entire apparatus.

In the solutions according to the aforementioned US specifications, there is, *inter alia,* no continuous circulation of control medium so that the temperature of the inlet valve cannot be adjusted in them with the control medium, e.g. in winter conditions it is not possible in them to warm the structures of the inlet valve sufficiently well. Also, gas that has accumulated in the control medium is difficult to remove in the solutions according to the aforementioned US specifications.

In the solution according to US patent specification No. US2009/0028723 A1, one flow channel leads into the cylinder space of the piston and a second flow channel leads to inside the piston. High-pressure gas and low-pressure gas are used alternately as a control medium, and they are conducted into the cylinder and out of the cylinder along the same flow channel that leads to the end of the piston. In the flow channel leading to inside the piston is high-pressure gas, by means of which either the bottom part of the piston is pressed to close the flow path for the gas to be compressed, or the piston is raised for opening the flow path for the gas to be compressed. The specification also mentions that by using the pressure of the gas to raise and lower the piston, the use of springs and their drawbacks can be eliminated. This is a complex solution with multiple seals and a special piston, and also requires a separate valve for changing the direction of piston movement. Furthermore, a gaseous control medium cannot be efficiently used for warming the inlet valve.

US patent specification No. US 2002/155007 A1 and Chinese patent specification No. CN 105 402 122 A disclose two different solutions for an inlet valve for a compressor pressing gaseous medium. However, these solutions differ from the solution of the present invention at least in that during regulation and closing of the shut-off means of the inlet valve, a part of the control medium is conducted from the cylinder space of the inlet valve into a seepage flow path as an essentially continuous flow, and another part of the control medium is conducted to control the piston. This enhances and quickens operation of the inlet valve and the valve also warms up to its operating temperature faster. Also, no air pockets form in the valve and so controlling the valve is more accurate.

### AIM OF THE INVENTION

It is the aim of the present invention to reduce or even eliminate the aforementioned problems occurring in prior art.

One aim of the present invention is to provide an operationally reliable inlet valve for a compressor, in which inlet valve, *inter alia,* the loading of the seals can be reduced.

One aim of the present invention is to provide an inlet valve for a compressor, the operation of which inlet valve can be controlled precisely and quickly, in which case also gas bubbles in the control medium can be removed quickly and efficiently.

One aim of the present invention is to provide an inlet valve for a compressor, the temperature of the casing and other parts of which inlet valve being adjustable.

### DESCRIPTION OF THE INVENTION

For achieving the aforementioned aims the compressor inlet valve, the compressor and the method according to the invention, as well as other objects of the invention, are characterized by what is disclosed in the independent claims attached hereto.

The embodiments and advantages referred to in this text relate insofar as applicable to the compressor inlet valve, to the compressor and also to the method according to the invention even when this is not expressly stated.

A typical compressor inlet valve, according to the invention, compressing a gaseous medium comprises a casing; an inlet channel that is formed through the casing for bringing gaseous medium into the inlet valve, to its inlet side; an outlet channel that is formed through the casing for removing gaseous medium from the inlet valve, from its outlet side; a cylinder space that is arranged at least partly inside the casing; a piston that is arranged to be moved in the cylinder space in a first direction, i.e. towards the inlet channel, and in a second direction, i.e. away from the inlet channel; two or more flow paths for control medium that are formed through the casing into the cylinder space for conducting control medium into the cylinder space and out of it, and thereby for moving the piston; and a shut-off means for regulating and for closing the flow of gaseous medium, which shut-off means is arranged to be moved by means of the piston. Preferably at least one flow path for control medium is connected to the cylinder space in such a way that during regulation and closing of the shut-off means the pressure of the control medium on the aforementioned flow path is lower than in the cylinder space.

A typical method, according to the invention, for controlling the inlet valve of a compressor compressing a gaseous medium comprises at least the following phases: gaseous medium is brought into the inlet valve, to the inlet side, into the inlet channel of the inlet valve; gaseous medium is removed from the outlet side of the inlet valve, from the outlet channel of the inlet valve; the piston is moved in the cylinder space of the inlet valve, said cylinder space being arranged at least partly inside the casing of the inlet valve, in a first direction, i.e. towards the inlet channel, and in a second direction, i.e. away from the inlet channel; the inlet channel is, if so desired, closed with a shut-off means that is operatively connected to the piston in such a way that it moves along with the movement of the piston. According to the invention, control medium is conducted along a first flow path for control medium through the casing of the inlet valve into the cylinder space, and along a second flow path away from the cylinder space at a lower pressure than the control pressure of the cylinder space, and thereby the piston and shut-off means are moved by controlling the pressure of the control medium in the cylinder space.

In one embodiment of the invention, the shut-off means is connected to the piston movably in relation to it, and a spring of the shut-off means is arranged between them, which spring is arranged to exert on the shut-off means a force moving it in a first direction. This solution enables evening out of the pressure differences moving the shut-off means, and/or prevention of backflow through the inlet valve, even if the piston does not move.

In one embodiment of the invention, inside the casing of the inlet valve, between the cylinder space and inlet channel, is a slide surface supporting the piston at a clearance distance from the outer surface of the piston. In this case at least one flow path for control medium is connected to the cylinder space via the clearance and is arranged to lead from the clearance of the slide surface and the outer surface of the piston to outside the cylinder space, preferably e.g. to the reservoir line. The solution enables a simple and operationally reliable structure.

According to the invention, a flow path for control medium is arranged to conduct part of the control medium out of the cylinder space during regulation and closing of the shut-off means. In such a case the essentially continuous flow of control medium can be used for adjustment of the temperature of the structures of the inlet valve.

In one embodiment of the invention, in connection with the slide surface supporting the piston, is a seal that is arranged to seal the clearance between the slide surface and the outer surface of the piston, and at least one flow path is connected to the cylinder space via the aforementioned clearance between the seal and the cylinder space. In such a case, by means of the aforementioned flow path, the pressure exerted on the piston clearance seal from the cylinder space side can easily be lowered. In this way sealing friction decreases and the service life of the seal increases. From the viewpoint of smooth operation of the valve, it is advantageous if the seal frictions can be kept low.

In one embodiment of the invention, the inlet valve comprises an outlet channel that is arranged to lead out of the cylinder space, typically from the top part of it, into the flow path for control medium. From the viewpoint of the operation of the control arrangement, it is important that as large a proportion as possible of the gases, even all the gases, can be removed from the cylinder space and from the control medium channels. The outlet channel is situated in such a way that the gases in the cylinder space and in the control medium can be efficiently removed.

In one embodiment of the invention, the control medium is a fluid medium, e.g. hydraulic oil. When it is desired to precisely adjust the amount of medium flowing into the compressor via the inlet valve, it is advantageous to use a fluid medium as a control medium.

One great advantage of the invention is the possibility of controlling the temperature of the inlet valve, e.g. of its casing, by means of the temperature of the control medium. Large amounts of gas can flow through the valve according to the invention, e.g. air conducted in from the outdoor air, that tries effectively to change the temperature of the valve. In the inlet valve according to the invention the heat or coolness of the control medium used to control the valve can be utilized. For example, the casing or flow channel of the valve can be heated or cooled with it. In the structure according to the invention, the parts that are in connection with control medium, i.e. the cylinder space, piston, spring and control medium channeling, for example, can be disposed inside the casing of the inlet valve. For example, these parts can be disposed inside the outlet channel of the inlet valve and in a part of the casing of the inlet valve surrounding it. If the casing is manufactured from a material that conducts heat very well, such as aluminum, control of the temperatures of the structure becomes more efficient than before.

It is possible to arrange a control medium heater or cooler and temperature control devices in connection with an inlet valve according to the invention. In this way adjustment of the temperature of the inlet valve can be made very precise if so required.

### BRIEF DESCRIPTION OF FIGURES

In the following, the invention will be described in more detail by referring to the attached diagrammatic and simplified drawings, wherein
- Fig. 1: presents an inlet valve according to the invention, as viewed from the side when cross-sectioned;
- Fig. 2: presents a partial enlargement of point B of Fig. 1; and
- Fig. 3: presents the fastening of the inlet valve according to Fig. 1 to the screw unit of the compressor, as viewed from the side when cross-sectioned.

### DETAILED DESCRIPTION OF THE EMBODIMENTS OF THE FIGURES

For the sake of clarity, the same reference numbers are used in the various figures and embodiments in the case of some parts that correspond to each other.

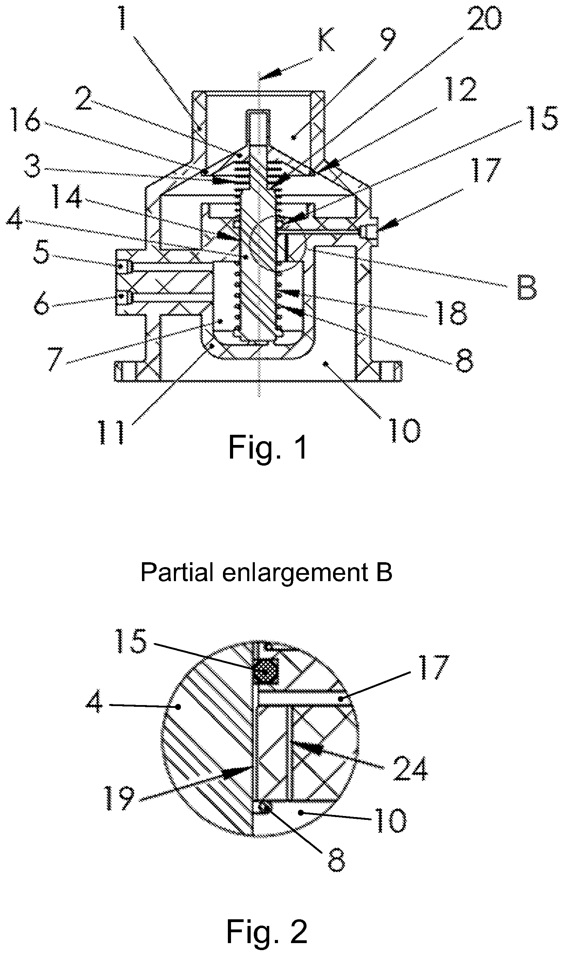

Fig. 1 presents a cross-sectioned inlet valve, according to the invention, intended for a flowing gaseous medium, which inlet valve is disposed on the inlet side of the compressor or in the piping of the inlet side. The inlet valve comprises a casing 1, and an inlet channel 9 formed through it, and also an outlet channel 10, between which channels is a shut-off means 2 for regulating and closing the flow of the flowing gaseous medium. The inlet valve further comprises at least a control unit 11 arranged at least partly inside the casing 1, which control unit comprises a cylinder space 7 and a piston 4 that is arranged to be moved in the cylinder space 7 in a first direction, i.e. towards the inlet channel 9, and in a second direction, i.e. away from the inlet channel 9. Preferably the shut-off means 2 and the piston 4, which is structurally a so-called plunger piston, is fitted into the casing 1 to be movable in the direction of the center axis K of the casing 1.

The inlet valve further comprises two or more flow paths 5, 6, 17 that are formed through the casing 1 into the cylinder space 7 for conducting the control medium of the inlet valve into the cylinder space 7 and out of it, and thereby for moving the piston 4. The flow paths 5, 6, 17 are situated e.g. in the control unit 11. Preferably the control medium flow paths 5 and 17 are arranged to conduct control medium into the reservoir line or directly into the reservoir so that control medium is removed from the cylinder space 7 via them. On the other hand, the flow path 6 is connected to the control system of the compressor in such a way that via the flow path 6 control medium is both fed into the cylinder space 7 and removed from it, in which case the control medium can travel reciprocally on the flow path 6.

Inside the casing 1, preferably in a part of the control unit 11 that is in the outlet channel 10, arranged between the cylinder space 7 and the inlet channel 9, is a slide surface 14 supporting the piston 4, the slide surface surrounding the piston 4 at the clearance 19 distance from the outer surface 18 of the piston. Preferably the piston 4 is round in cross-section, in which case also the slide surface 14 is round in cross-section. In the slide surface 14 is a circular groove, in which is disposed a seal 15 for sealing the clearance 19 between the slide surface 14 and the outer surface of the piston 4, i.e. more briefly the clearance of the piston 4.

For displacing the shut-off means 2, a spring 3 is disposed between the shut-off means 2 and the piston 4, which spring 3 tries to displace the shut-off means 2 against the seal surface 12 at the bottom end of the inlet channel 9 by leaning on the piston 4. Preferably the shut-off means 2 is arranged into operative connection with the piston 4. The seal surface 12 is between the inlet channel 9 and outlet channel 10 and for implementing the sealing there is a seal 16 between the seal surface 12 and the shut-off means 2. By means of the inlet valve, the flow between the inlet channel 9 and outlet channel 10 is closable and adjustable and also the backflow of it is preventable.

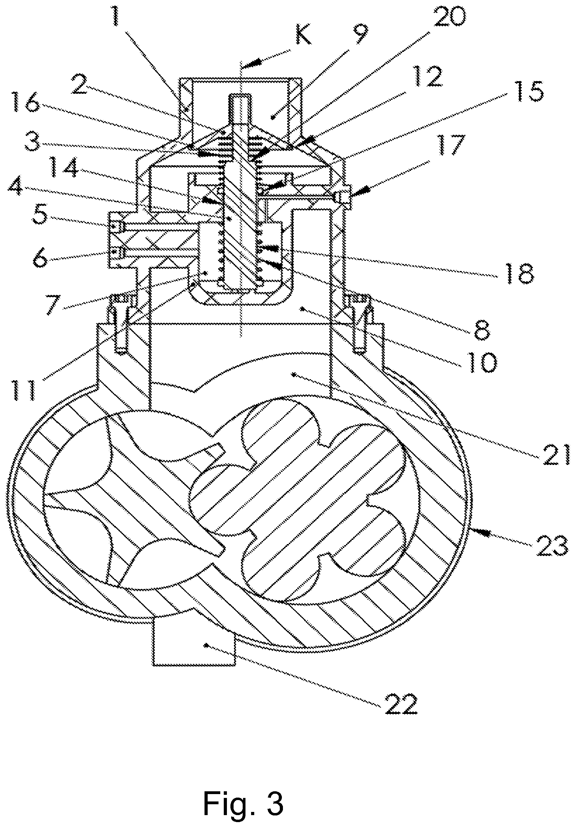

For example, if the inlet valve is in the open position, i.e. when the flow of the medium being compressed presses the shut-off means 2 downwards in Figs. 1 and 3, then when the drive motor of the compressor stops the structure according to the invention allows displacement of the shut-off means 2 upwards, i.e. into the closed position, even if the piston 4 was stationary. The spring 3 assists in displacing the shut-off means 2 into the closed position, i.e. in Figs 1 and 3 upwards, in which case the shut-off means 2 presses against the seal surface 12. In this way backflow between the inlet channel 9 and the outlet channel 10 of the inlet valve can be prevented.

On the bottom end, i.e. on the second end, of the piston 4, in line with the center axis K is disposed a spring 8, the purpose of which is to displace the piston 4 into the initial position, i.e. Into the bottom position in the embodiment presented in the figures, when the pressure of the control medium has left the cylinder space 7 via the control medium flow paths 5, 6, 17, i.e. flow channels. For closing and/or regulating the flow, the control pressure of the control medium is conducted into and removed from the cylinder space 7 typically via the first flow paths 5 and 6, whereas the second flow path or flow channel, i.e. the seepage flow path 17, is preferably used exclusively for removing control medium and gas from the cylinder space 7 and its channeling.

The inlet valve presented in Fig.1 can be fastened e.g. into the screw unit 23 of the compressor in the manner presented in Fig. 3. The inlet valve is fastened to the casing of the compressor in such a way that the lower flow channel of the inlet valve, i.e. the outlet channel 10, is tightly connected to the suction orifice 21 of the screw unit 23 of the compressor, or to piping leading to it.

After the compressor has started, negative pressure forms in the outlet channel 10, which negative pressure acts on the shut-off means 2. In this case the spring 2 is compressed and the shut-off means 2 displaces into the open position, in Figs. 1 and 3 downwards, and at the same time towards the suction orifice 21 of the screw unit 23 of the compressor. Air or some other gas to be compressed is then able to flow into the inlet channel 9 and via the outlet channel 10 into the compressor. The compressor starts to produce pressure, which is discharged via the pressure orifice 22. When the pressure of the gaseous medium to be compressed has risen to the desired level, pressurized control medium, controlled by the compressor control system, comes e.g. via the first flow channel 6 into the cylinder space 7. In this case the piston 4 starts to move towards the inlet channel 9 and simultaneously moves, via the spring 3, the shut-off means 2, which moves in Figs. 1 and 3 upwards towards the inlet channel 9 and at the same time restricts the amount of gas flowing through the inlet channel 9. At the same time control medium escapes from the first flow channel 5 via some part (not presented) of the control system. A suitable amount of control medium also escapes via the seepage flow path 17. Preferably control medium can escape directly into the reservoir line for control medium, in which line the pressure is lower than the control pressure prevailing in the cylinder space 7. According to the invention, a pressure lower than the control pressure of the cylinder space 7 also prevails in the seepage flow path 17. After the control pressure has risen in the cylinder space 7 to a sufficiently high level, the piston 4 displaces the shut-off means 2 against the seal surface 12, in which case flowing of the gas into the compressor is prevented.

The parts that are in connection with control medium, i.e. the cylinder space 7, piston 4, spring 8 and control medium flow paths 5, 6, 17, are disposed in the control unit 11 inside the casing 1 of the inlet valve. For example, these parts can be disposed inside the outlet channel 10 and in a part of the casing 1 of the inlet valve surrounding it. In this way the temperature, i.e. the heat or coolness, of the control medium used for control of the inlet valve can be used for warming or cooling the inlet valve.

In the structure according to the invention presented by the figures, the spring force of the spring 8 exerts a force on the piston 4 that pushes the piston towards its initial position, i.e. towards the second end of the piston. A typical piston 4 according to the invention is structurally a so-called plunger piston. From the viewpoint of seal frictions, this is an advantageous solution because only one piston clearance seal 15 is needed. During operation of the inlet valve, the control pressure varies in the cylinder space 7 and therefore also on the seal 15. A rise in control pressure increases to some extent the compression of the seal 15 against the outer surface 18 of the piston 4. At the same time the friction increases. It is advantageous if the pressure exerted on the seal 15 can be reduced with a suitable structure. In the structure according to Figs. 1-3, the seepage flow path 17 leads from the piston clearance 19 into the reservoir line, in which the pressure is lower than the control pressure acting in the cylinder space 7. In this case the seepage flow path 17 is connected to the cylinder space 7 via the piston clearance 19 between the seal 15 and the cylinder space 7. Suitably, the junction of the seepage flow path 17 with the piston clearance 19 is near the seal 15.

Preferably the piston clearance 19 in connection with the cylinder space 7 can be made to be suitably large so that the pressure acting on the seal 15 is, in practice, the same as the pressure of the reservoir line. With this arrangement, the pressure exerted on the seal 15 can be reduced and thus the seal friction can also be lowered.

The performance of the seals also affects their temperature. In the structure presented by Figs. 1-3, the piston 4 and cylinder space 7 surrounding it, as well as the seal 15, are disposed inside the casing of the inlet valve 1. Two or more flow paths 5, 6, 17 for control medium lead into the cylinder space 7. Of these, one can be connected to the control system of the compressor and one of the others to the return flow piping or to the control system of the compressor. Owing to this kind of arrangement, the control medium can efficiently warm or cool the structure. Heat transfer is particularly efficient if the material of the casing 1 is aluminum, which as a good thermal conductor evens out the temperatures of the structure.

When using several flow paths 5, 6, 17 for control medium, the removal of air or other gas from the control channeling of the inlet valve and from the cylinder space is more efficient than in a system comprising one flow path. The flow path 5 is used mainly to boost the transfer of control medium temperature into the parts of the inlet valve. In such a case, the control medium is removed from the cylinder space 7 via the flow path 5, in which case the circulation speed of the control medium in the cylinder space 7 increases.

The removal of gases from the control channeling and from the cylinder space 7 can be made more efficient by disposing a suitably sized outlet channel 24 in the structure to connect the cylinder space 7 and the seepage flow path 17 directly or indirectly to each other. In such a case, all the gas does not need to travel via the piston clearance 19. Preferably the outlet channel 24 is disposed between the top part of the cylinder space 7 and the seepage flow path 17. The placement is best seen in the partial enlargement B in Fig. 2. Air and other gases flow in the fluid upwards so that, owing to the placement of the outlet channel 24, gas removal from the structures of the inlet valve is more efficient.

In one embodiment of the invention, compared to the embodiment presented by Figs. 1-3, the flow channel 5 and outlet channel 24 can be completely omitted. In this case, the piston clearance 19 is formed to be suitable in such a way that the flow of the control medium between the flow paths 6 and 17 is made to be such that the control medium is able to warm the casing 1 of the inlet valve efficiently. At the same time, any air that has collected in the channeling of the inlet valve is efficiently removed.

As presented above, in the solution according to a preferred embodiment the seepage flow path 17 is connected to the cylinder space 7 at least via the piston clearance 19, but in addition a separate outlet channel 24 can also be used to connect the cylinder space 7 and the seepage flow path 17 directly to each other. Depending on the structure, the piston clearance 19, alone or together with the outlet channel 24, is arranged to form a passage for the control medium from the cylinder space 7 into the seepage flow path 17. Preferably the combined cross-sectional area of the aforementioned passage is adapted to be smaller than the cross-sectional area of the first flow channel 6 feeding control medium into the cylinder space 7, in which case the aforementioned passage forms a choke, between the cylinder space 7 and the seepage flow path 17, for the flow of control medium. In this case a part of the control pressure of the control medium goes to controlling the movement of the piston 4 and a part circulates via the seepage flow path 17 to the reservoir line that is at a lower pressure. According to this solution, the seepage flow path 17 for control medium is connected to the cylinder space 7 via a choke in such a way that, during regulation and closing of the shut-off means 2, the seepage flow path 17 conducts control medium out of the cylinder space 7, but the pressure of the control medium on the seepage flow path 17 is lower than in the cylinder space 7. In the solution according to a preferred embodiment, during regulation and closing of the shut-off means 2, a part of the control medium is conducted from the cylinder space 7 into the seepage flow path 17 as an essentially continuous flow, and another part of the control medium is conducted to control the piston 4.

The invention is not intended to be restricted to the embodiments presented above, but instead the independent claims define the scope of protection. The dependent claims present a few preferred embodiments of the invention.

## Claims

1. Inlet valve for a compressor pressing gaseous medium, which inlet valve comprises
- a casing (1);
- an inlet channel (9) that is formed through the casing for bringing gaseous medium into the inlet valve, to its inlet side;
- an outlet channel (10) that is formed through the casing for removing gaseous medium from the inlet valve, from its outlet side;
- a cylinder space (7) that is arranged at least partly inside the casing (1);
- a piston (4) that is arranged to be moved in the cylinder space (7) in a first direction towards the inlet channel (9), and in a second direction away from the inlet channel (9);
- two or more flow paths (5, 6, 17) for control medium that are formed through the casing (1) into the cylinder space (7) for conducting control medium into the cylinder space (7) and out of it, and thereby for moving the piston (4);
- a shut-off means (2) for regulating and for closing the flow of gaseous medium, which shut-off means (2) is arranged to be moved by means of the piston (4);
- at least one flow path for control medium is a seepage flow path (17) that is connected to the cylinder space (7) in such a way that during regulation and closing of the shut-off means (2) the pressure of the control medium on the seepage flow path (17) is lower than in the cylinder space (7),
**characterized in that** the inlet valve is configured so that during regulation and closing of the shut-off means (2), a part of the control medium is conducted from the cylinder space (7) into the seepage flow path (17) as an essentially continuous flow, and another part of the control medium is conducted to control the piston (4).

2. Inlet valve according to claim 1, **characterized in that** inside the casing (1), between the cylinder space (7) and the inlet channel (9), is a slide surface (14) supporting the piston (4) at a clearance (19) distance from the outer surface (18) of the piston (4), and **in that** the seepage flow path (17) is connected to the cylinder space (7) via the clearance (19).

3. Inlet valve according to claim 2, **characterized in that** the seepage flow path (17) is arranged to lead from the clearance (19) of the slide surface (14) and the outer surface (18) of the piston to outside the cylinder space (7).

4. Inlet valve according to claim 1, 2 or 3, **characterized in that** the seepage flow path (17) is arranged to conduct control medium out of the cylinder space (7) during regulation and closing of the shut-off means (2).

5. Inlet valve according to any of the preceding claims 2-4, **characterized in that** in connection with the slide surface (14) is a seal (15) that is arranged to seal the clearance (19) between the slide surface (14) and the outer surface (18) of the piston.

6. Inlet valve according to claim 5, **characterized in that** the seepage flow path (17) is connected to the cylinder space (7) via the clearance (19) between the seal (15) and the cylinder space (7).

7. Inlet valve according to any of the claims presented above, **characterized in that** the inlet valve comprises another outlet channel (24) that is arranged to lead out of the cylinder space (7), typically from the top part of it, into the seepage flow path (17).

8. Inlet valve according to any of the preceding claims, **characterized in that** the seepage flow path (17) leads to a reservoir line for control medium, in which line the pressure is lower than the control pressure prevailing in the cylinder space (7).

9. A compressor comprising an inlet valve, an outlet channel (10) of which inlet valve is connected to a suction orifice (21) of the compressor, **characterized in that** the inlet valve is according to any of the preceding claims 1-8.

10. Method for controlling an inlet valve of a compressor pressing a gaseous medium, which method comprises at least the following phases:
- gaseous medium is brought into the inlet valve, to an inlet side, into an inlet channel (9) of the inlet valve;
- gaseous medium is removed from an outlet side of the inlet valve, from an outlet channel (10) of the inlet valve;
- a piston (4) is moved in a cylinder space (7) of the inlet valve, said cylinder space being arranged at least partly inside a casing (1) of the inlet valve, in a first direction towards the inlet channel (9), and in a second direction away from the inlet channel (9);
- the inlet channel (9) is, if so desired, closed with a shut-off means (2) that is operatively connected to the piston (4) in such a way that said shut-off means moves along with the movement of the piston (4);
- control medium is conducted along a first flow path (5, 6) for control medium through the casing (1) of the inlet valve into the cylinder space (7) and along a second flow path being a seepage flow path (17), away from the cylinder space (7) at a lower pressure than the control pressure of the cylinder space (7), and thereby the piston (4) and shut-off means (2) are moved by controlling the pressure of the control medium in the cylinder space (7),
**characterized in that** during regulation and closing of the shut-off means (2), a part of the control medium is conducted from the cylinder space (7) into the seepage flow path (17) as an essentially continuous flow, and another part of the control medium is conducted to control the piston (4).

11. Method according to claim 10, **characterized in that** control medium is conducted from the cylinder space (7) into the seepage flow path (17) via a throttle and along the seepage flow path (17) to outside the inlet valve.

12. Method according to claim 10 or 11, **characterized in that** control medium is conducted via a clearance (19) between the slide surface (14) between the cylinder space (7) and inlet channel (9) and the outer surface (18) of the piston into the seepage flow path (17) to outside the cylinder space (7) and thereby the pressure exerted on the clearance (19) and on the piston (4) seal (15) disposed in the clearance (19) is reduced, and **in that** control medium is conducted along the seepage flow path (17) onwards into a space that is under lower pressure than the cylinder space (7), such as into the reservoir line and/or the control medium reservoir.

13. Method according to claim 10, 11 or 12, **characterized in that** control medium and/or the gas in it is conducted from the cylinder space (7) into the seepage flow path (17) via a separate outlet channel (24).

14. Method according to any of claims 12 or 13 presented above, **characterized in that** the temperature of the structures of the inlet valve are adjusted by conducting control medium at the desired temperature via the clearance (19) and, if necessary, also via a or the separate outlet channel (24) from the cylinder space (7) into the seepage flow path (17).

15. Method according to any of claims 10-14 presented above, **characterized in that** fluid medium, preferably hydraulic oil, is conducted as a control medium into the cylinder space (7) of the inlet valve and out from it.

## Patentansprüche

1. Einlassventil für einen Verdichter, der ein gasförmiges Medium verdichtet, wobei das Einlassventil Folgendes umfasst:
- ein Gehäuse (1);
- einen Einlasskanal (9), der durch das Gehäuse hindurch ausgebildet ist, zum Einbringen des gasförmigen Mediums in das Einlassventil zu seiner Einlassseite;
- einen Auslasskanal (10), der durch das Gehäuse hindurch ausgebildet ist, zum Entnehmen des gasförmigen Mediums von dem Einlassventil von seiner Auslassseite;
- einen Zylinderraum (7), der wenigstens teilweise innerhalb des Gehäuses (1) angeordnet ist;
- einen Kolben (4), der angeordnet ist, um in dem Zylinderraum (7) in einer ersten Richtung zu dem Einlasskanal (9) hin und in einer zweiten Richtung von dem Einlasskanal (9) weg bewegt zu werden;
- zwei oder mehr Strömungswege (5, 6, 17) für ein Steuermedium, die durch das Gehäuse (1) hindurch in den Zylinderraum (7) ausgebildet sind, zum Leiten des Steuermediums in den Zylinderraum (7) und aus diesem heraus, und dadurch zum Bewegen des Kolbens (4);
- ein Absperrmittel (2) zum Regeln und zum Schließen der Strömung des gasförmigen Mediums, wobei das Absperrmittel (2) angeordnet ist, um mittels des Kolbens (4) bewegt zu werden;
- wobei wenigstens ein Strömungsweg für das Steuermedium ein Sickerströmungsweg (17) ist, der derart mit dem Zylinderraum (7) verbunden ist, dass, während einer Regelung und des Schließens des Absperrmittels (2), der Druck des Steuermediums auf dem Sickerströmungsweg (17) niedriger als in dem Zylinderraum (7) ist,
**dadurch gekennzeichnet, dass** das Einlassventil konfiguriert ist, so dass während der Regelung und des Schließens des Absperrmittels (2), ein Teil des Steuermediums von dem Zylinderraum (7) in den Sickerströmungsweg (17) als eine im Wesentlichen fortlaufende Strömung geleitet wird, und ein anderer Teil des Steuermediums geleitet wird, um den Kolben (4) zu steuern.

2. Einlassventil nach Anspruch 1, **dadurch gekennzeichnet, dass** sich innerhalb des Gehäuses (1) zwischen dem Zylinderraum (7) und dem Einlasskanal (9) eine Gleitoberfläche (14) befindet, die den Kolben (4) in einem Freiraum(19)-Abstand von der Außenoberfläche (18) des Kolbens (4) stützt und wobei damit der Sickerströmungsweg (17) mit dem Zylinderraum (7) über den Freiraum (19) verbunden ist.

3. Einlassventil nach Anspruch 2, **dadurch gekennzeichnet, dass** der Sickerströmungsweg (17) angeordnet ist, um von dem Freiraum (19) der Gleitoberfläche (14) und der Außenoberfläche (18) des Kolbens nach außerhalb des Zylinderraums (7) zu führen.

4. Einlassventil nach Anspruch 1, 2 oder 3, **dadurch gekennzeichnet, dass** der Sickerströmungsweg (17) angeordnet ist, um das Steuermedium aus dem Zylinderraum (7) während der Regelung und des Schließens des Absperrmittels (2) zu leiten.

5. Einlassventil nach einem der vorhergehenden Ansprüche 2-4, **dadurch gekennzeichnet, dass** in Verbindung mit der Gleitoberfläche (14) eine Dichtung (15) vorhanden ist, die angeordnet ist, um den Freiraum (19) zwischen der Gleitoberfläche (14) und der Außenoberfläche (18) des Kolbens abzudichten.

6. Einlassventil nach Anspruch 5, **dadurch gekennzeichnet, dass** der Sickerströmungsweg (17) mit dem Zylinderraum (7) über den Freiraum (19) zwischen der Dichtung (15) und dem Zylinderraum (7) verbunden ist.

7. Einlassventil nach einem der vorhergehenden Ansprüche, **dadurch gekennzeichnet, dass** das Einlassventil einen anderen Auslasskanal (24) umfasst, der angeordnet ist, um aus dem Zylinderraum (7), typischerweise von dessen oberen Teil, in den Sickerströmungsweg (17) zu führen.

8. Einlassventil nach einem der vorhergehenden Ansprüche, **dadurch gekennzeichnet, dass** der Sickerströmungsweg (17) zu einer Vorratsbehälterleitung für das Steuermedium führt, wobei der Druck in der Leitung niedriger als der Steuerdruck ist, der in dem Zylinderraum (7) herrscht.

9. Verdichter, der ein Einlassventil, einen Auslasskanal (10), wobei das Einlassventil mit einer Ansaugöffnung (21) des Verdichters verbunden ist, umfasst, **dadurch gekennzeichnet, dass** das Einlassventil einem der vorhergehenden Ansprüche 1-8 entspricht.

10. Verfahren zum Steuern eines Einlassventils eines Verdichters, der ein gasförmiges Medium verdichtet, wobei das Verfahren wenigstens die folgenden Phasen umfasst:
- das gasförmige Medium wird in das Einlassventil zu einer Einlassseite in einen Einlasskanal (9) des Einlassventils eingebracht;
- das gasförmige Medium wird von einer Auslassseite des Einlassventils aus einem Auslasskanal (10) des Einlassventils entnommen;
- ein Kolben (4) wird in einem Zylinderraum (7) des Einlassventils bewegt, wobei der Zylinderraum wenigstens teilweise innerhalb eines Gehäuses (1) des Einlassventils in einer ersten Richtung zu dem Einlasskanal (9) hin, und in einer zweiten Richtung von dem Einlasskanal (9) weg angeordnet wird;
- der Einlasskanal (9) wird, falls gewünscht, mit einem Absperrmittel (2) geschlossen, das mit dem Kolben (4) derart wirkverbunden ist, dass sich das Absperrmittel entlang mit der Bewegung des Kolbens (4) bewegt;
- das Steuermedium wird entlang eines ersten Strömungswegs (5, 6) für das Steuermedium durch das Gehäuse (1) des Einlassventils hindurch in den Zylinderraum (7) und entlang eines zweiten Strömungswegs, der ein Sickerströmungsweg (17) ist, von dem Zylinderraum (7) weg bei einem niedrigeren Druck als der Steuerdruck des Zylinderraums (7) geleitet, und wobei dadurch der Kolben (4) und das Absperrmittel (2) durch Steuern des Drucks des Steuermediums in dem Zylinderraum (7) bewegt werden,
**dadurch gekennzeichnet, dass** während der Regelung und des Schließens des Absperrmittels (2) ein Teil des Steuermediums von dem Zylinderraum (7) in den Sickerströmungsweg (17) als eine im Wesentlichen fortlaufende Strömung geleitet wird, und ein anderer Teil des Steuermediums geleitet wird, um den Kolben (4) zu steuern.

11. Verfahren nach Anspruch 10, **dadurch gekennzeichnet, dass** das Steuermedium aus dem Zylinderraum (7) in den Sickerströmungsweg (17) über eine Drosselung und entlang des Sickerströmungswegs (17) nach außerhalb des Einlassventils geleitet wird.

12. Verfahren nach Anspruch 10 oder 11, **dadurch gekennzeichnet, dass** das Steuermedium über einen Freiraum (19) zwischen der Gleitoberfläche (14) zwischen dem Zylinderraum (7) und dem Einlasskanal (9) und der Außenoberfläche (18) des Kolbens in den Sickerströmungsweg (17) nach außerhalb des Zylinderraums (7) geleitet wird, und wobei dadurch der Druck, der auf den Freiraum (19) und auf die Kolben(4)-Dichtung (15) ausgeübt wird, die in dem Freiraum (19) angeordnet ist, reduziert wird, und wobei das Steuermedium entlang des Sickerströmungswegs (17) weiter in einen Raum geleitet wird, der unter niedrigerem Druck als der Zylinderraum (7) steht, wie etwa in die Vorratsbehälterleitung und/oder den Steuermediumvorratsbehälter.

13. Verfahren nach Anspruch 10, 11 oder 12, **dadurch gekennzeichnet, dass** das Steuermedium und/oder das darin enthaltene Gas von dem Zylinderraum (7) in den Sickerströmungsweg (17) über einen separaten Auslasskanal (24) geleitet wird.

14. Verfahren nach einem der vorhergehenden Ansprüche 12 oder 13, **dadurch gekennzeichnet, dass** die Temperatur der Strukturen des Einlassventils durch Leiten des Steuermediums bei der gewünschten Temperatur über den Freiraum (19), und, falls erforderlich, ebenso über einen oder den separaten Auslasskanal (24) von dem Zylinderraum (7) in den Sickerströmungsweg (17), angepasst wird.

15. Verfahren nach einem der vorhergehenden Ansprüche 10-14, **dadurch gekennzeichnet, dass** ein Fluidmedium, bevorzugt ein Hydrauliköl, als ein Steuermedium in den Zylinderraum (7) des Einlassventils und aus diesem heraus geleitet wird.

## Revendications

1. Soupape d'admission pour un compresseur pressant un milieu gazeux, laquelle soupape d'admission comprend
- un boîtier (1) ;
- un canal d'admission (9) qui est formé à travers le boîtier pour amener le milieu gazeux dans la soupape d'admission, sur son côté d'admission ;
- un canal de décharge (10) qui est formé à travers le boîtier pour éliminer le milieu gazeux de la soupape d'admission, depuis son côté de décharge ;
- un espace cylindrique (7) qui est agencé au moins partiellement à l'intérieur du boîtier (1) ;
- un piston (4) qui est agencé pour être déplacé dans l'espace cylindrique (7) dans une première direction vers le canal d'admission (9) et dans une seconde direction à l'opposé du canal d'admission (9) ;
- deux ou plusieurs trajets d'écoulement (5, 6, 17) pour le milieu de commande qui sont formées à travers le boîtier (1) dans l'espace cylindrique (7) pour conduire le milieu de commande dans l'espace cylindrique (7) et hors de celui-ci, et ainsi pour déplacer le piston (4) ;
- un moyen d'arrêt (2) pour réguler et pour fermer l'écoulement de milieu gazeux, lequel moyen d'arrêt (2) est agencé pour être déplacé au moyen du piston (4) ;
- au moins un trajet d'écoulement pour le milieu de commande est un trajet d'écoulement d'infiltration (17) qui est relié à l'espace cylindrique (7) de telle sorte que, lors de la régulation et de la fermeture du moyen d'arrêt (2), la pression du fluide de commande sur le trajet d'écoulement d'infiltration (17) est inférieure à celle dans l'espace cylindrique (7),
**caractérisée en ce que** la soupape d'admission est conçue de telle sorte que pendant la régulation et la fermeture du moyen d'arrêt (2), une partie du milieu de commande est conduite depuis l'espace cylindrique (7) dans le trajet d'écoulement d'infiltration (17) sous la forme d'un écoulement essentiellement continu, et une autre partie du milieu de commande est conduite pour commander le piston (4).

2. Soupape d'admission selon la revendication 1, **caractérisée en ce qu'**à l'intérieur du boîtier (1), entre l'espace cylindrique (7) et le canal d'admission (9), se trouve une surface du coulisseau (14) supportant le piston (4) à une distance de jeu (19) de la surface externe (18) du piston (4), et **en ce que** le trajet d'écoulement d'infiltration (17) est relié à l'espace cylindrique (7) par l'intermédiaire du jeu (19).

3. Soupape d'admission selon la revendication 2, **caractérisée en ce que** le trajet d'écoulement d'infiltration (17) est agencé pour mener du jeu (19) de la surface du coulisseau (14) et de la surface externe (18) du piston vers l'extérieur de l'espace cylindrique (7).

4. Soupape d'admission selon la revendication 1, 2 ou 3, **caractérisée en ce que** le trajet d'écoulement d'infiltration (17) est agencé pour conduire le milieu de commande hors de l'espace cylindrique (7) pendant la régulation et la fermeture du moyen d'arrêt (2).

5. Soupape d'admission selon l'une quelconque des revendications précédentes 2 à 4, **caractérisée en ce qu'**en relation avec la surface du coulisseau (14) se trouve un joint (15) qui est agencé pour sceller le jeu (19) entre la surface du coulisseau (14) et le surface externe (18) du piston.

6. Soupape d'admission selon la revendication 5, **caractérisée en ce que** le trajet d'écoulement d'infiltration (17) est relié à l'espace cylindrique (7) par l'intermédiaire du jeu (19) entre le joint (15) et l'espace cylindrique (7).

7. Soupape d'admission selon l'une quelconque des revendications présentées ci-dessus, **caractérisée en ce que** la soupape d'admission comprend un autre canal de décharge (24) qui est agencé pour déboucher hors de l'espace cylindrique (7), habituellement depuis la partie supérieure de celui-ci, dans le trajet d'écoulement d'infiltration (17).

8. Soupape d'admission selon l'une quelconque des revendications précédentes, **caractérisée en ce que** le trajet d'écoulement d'infiltration (17) mène à une conduite de réservoir pour le milieu de commande, dans laquelle conduite la pression est inférieure à la pression de commande régnant dans l'espace cylindrique (7).

9. Compresseur comprenant une soupape d'admission, un canal de décharge (10) dont la soupape d'admission est reliée à un orifice d'aspiration (21) du compresseur, **caractérisé en ce que** la soupape d'admission est selon l'une quelconque des revendications précédentes 1 à 8.

10. Procédé de commande d'une soupape d'admission d'un compresseur pressant un milieu gazeux, lequel procédé comprend au moins les phases suivantes :
- le milieu gazeux est introduit dans la soupape d'admission, vers un côté d'admission, dans un canal d'admission (9) de la soupape d'admission ;
- le milieu gazeux est retiré d'un côté de décharge de la soupape d'admission, depuis un canal de décharge (10) de la soupape d'admission ;
- un piston (4) est déplacé dans un espace cylindrique (7) de la soupape d'admission, ledit espace cylindrique étant agencé au moins partiellement à l'intérieur d'un boîtier (1) de la soupape d'admission, dans une première direction vers le canal d'admission (9), et dans une seconde direction s'éloignant du canal d'admission (9) ;
- le canal d'admission (9) est, si on le souhaite, fermé par un moyen d'arrêt (2) qui est fonctionnellement relié au piston (4) de telle manière que ledit moyen d'arrêt se déplace avec le mouvement du piston (4) ;
- le milieu de commande est conduit le long d'un premier trajet d'écoulement (5, 6) pour le milieu de commande à travers le boîtier (1) de la soupape d'admission dans l'espace cylindrique (7) et le long d'un second trajet d'écoulement étant un trajet d'écoulement d'infiltration (17), loin de l'espace cylindrique (7) à une pression inférieure à la pression de commande de l'espace cylindrique (7), et ainsi le piston (4) et le moyen d'arrêt (2) sont déplacés en commandant la pression du milieu de commande dans l'espace cylindrique (7),
**caractérisé en ce que** pendant la régulation et la fermeture du moyen d'arrêt (2), une partie du milieu de commande est conduite de l'espace cylindrique (7) dans le trajet d'écoulement d'infiltration (17) sous la forme d'un écoulement essentiellement continu, et une autre partie du milieu de commande est conduite pour commander le piston (4).

11. Procédé selon la revendication 10, **caractérisé en ce que** le milieu de commande est conduit de l'espace cylindrique (7) dans le trajet d'écoulement d'infiltration (17) par l'intermédiaire d'un étranglement et le long du trajet d'écoulement d'infiltration (17) vers l'extérieur de la soupape d'admission.

12. Procédé selon la revendication 10 ou 11, **caractérisé en ce que** le milieu de commande est conduit par l'intermédiaire d'un jeu (19) entre la surface du coulisseau (14) entre l'espace cylindrique (7) et le canal d'admission (9) et la surface externe (18) du piston dans le trajet d'écoulement d'infiltration (17) vers l'extérieur de l'espace cylindrique (7) et ainsi la pression exercée sur le jeu (19) et sur le joint (15) de piston (4) disposé dans le jeu (19) est réduite, et **en ce que** le milieu de commande est conduit le long du trajet d'écoulement d'infiltration (17) dans un espace qui est sous une pression inférieure à l'espace cylindrique (7), tel que dans la conduite de réservoir et/ou le réservoir de milieu de commande.

13. Procédé selon la revendication 10, 11 ou 12, **caractérisé en ce que** le milieu de commande et/ou le gaz qu'il contient est conduit depuis l'espace cylindrique (7) dans le trajet d'écoulement d'infiltration (17) par l'intermédiaire d'un canal de décharge séparé (24).

14. Procédé selon l'une quelconque des revendications 12 ou 13 présentées ci-dessus, **caractérisé en ce que** la température des structures de la soupape d'admission est ajustée en conduisant le milieu de commande à la température souhaitée par l'intermédiaire du jeu (19) et, si nécessaire, également par l'intermédiaire d'un ou des le canal de décharge de séparation (24) à partir de l'espace cylindrique (7) dans le trajet d'écoulement d'infiltration (17).

15. Procédé selon l'une quelconque des revendications 10 à 14 présentées ci-dessus, **caractérisé en ce que** le milieu fluide, de préférence de l'huile hydraulique, est conduit comme milieu de commande dans l'espace cylindrique (7) de la soupape d'admission et hors de celui-ci.
